Europäisches Patentamt

European Patent Office

Office européen des brevets

(11) Veröffentlichungsnummer: **0 071 762**
A1

# (12) EUROPÄISCHE PATENTANMELDUNG

(21) Anmeldenummer: 82105983.9

(22) Anmeldetag: 05.07.82

(51) Int. Cl.³: **F 16 D 65/06, B 61 H 1/00**

(30) Priorität: 05.08.81 AT 3446/81

(43) Veröffentlichungstag der Anmeldung: 16.02.83
Patentblatt 83/7

(84) Benannte Vertragsstaaten: **BE CH DE FR LI SE**

(71) Anmelder: **STABEG Apparatebaugesellschaft m.b.H.,
Reinlgasse 5-9, A-1140 Wien (AT)**

(72) Erfinder: **Einsiedl, Ernst, Schwenkgasse 8/17,
A-1120 Wien (AT)**
Erfinder: **Eberharter, Walter, Meiselstrasse 24,
A-1150 Wien (AT)**
Erfinder: **Piniel, Herbert, Stolberggasse 17, A-1050 Wien
(AT)**

(74) Vertreter: **Hofinger, Engelbert, DDr. et al,
Wilhelm-Greil-Strasse 16, A-6020 Innsbruck (AT)**

(54) **Bremsklotz für Schienenfahrzeuge.**

(57) Beschrieben wird ein Bremsklotz für Schienenfahrzeuge, bei dem an einem Bremsklotz-Schuh (2) mittels einer in einen Zapfen (4) einhängbaren Bremsklotzfeder (1) zwei Bremsklotz-Sohlen (5) befestigt sind, wobei das obere Ende der nach oben in den Bremsklotz-Schuh (2) einschiebbaren Feder (1) einen unten offenen Haken (3) aufweist, der nach unten in eine Öse (6) eingeschoben ist, die in eine Aussparung des Bremsklotz-Schuhs eingesteckt ist. Die Feder (1) ist mittels eines der an ihr vorgesehenen nach unten offenen Haken (3) in den Zapfen (4) eingehängt.

- 1 -

Bremsklotz für Schienenfahrzeuge

Die Erfindung bezieht sich auf einen Bremsklotz für Schienenfahrzeuge, bei dem an einem Bremsklotz-Schuh mittels einer in einen Zapfen einhängbaren Bremsklotz-Feder mindestens eine Bremsklotz-Sohle befestigt ist, wobei wenigstens das obere Ende der nach oben in den Bremsklotz-Schuh einschiebbaren Feder einen unten offenen Haken aufweist, der nach unten in eine Öse eingeschoben ist, der in eine Aussparung des Bremsklotz-Schuhs eingesteckt ist.

Aus DE-AS 1 215 741 ist eine derartige Einrichtung bekannt geworden, welche zur Verhinderung eines Lösens aus der Verriegelungslage am unteren Ende eine Splintsicherung aufweist. Dadurch wird zwar verhindert, daß der Bügel, was an sich kaum vorstellbar ist, gegen die Wirkung der Schwerkraft nach oben rutscht, andererseits aber ist eine solche Sicherung während der Montage außer Kraft gesetzt, sodaß die Bremsklotz-Sohlen nicht durch einen Arbeiter allein ausgewechselt werden können, da die Feder dauernd gegen Herausfallen gesichert werden muß.

Aus AT-PS 339.365 ist andererseits eine Einrichtung bekannt geworden, bei der die Bremsklotz-Feder zwar durch Stege im Bremsklotz-Schuh und damit zusammenwirkende Anschläge an der Feder in der Montagestellung gesichert ist, welche aber in der Betriebsstellung durch einen Splintbolzen gesichert sein muß, da sie von unten her in die Betriebsstellung gebracht wird und daher unter dem Einfluß der Schwerkraft herausfallen könnte.

Die Erfindung geht demgegenüber von der Überlegung aus, daß bei einer Einrichtung der eingangs skizzierten Art die Sicherung der Feder in der Montagestellung durch ohnedies vorhandene Teile der Feder zu bewirken ist und sieht vor, daß die Feder mittels eines der an ihr vorgesehenen, nach unten offenen Haken in den Zapfen eingehängt ist.

Durch Splinte gesicherte Fixierzapfen, die nach einiger Betriebsdauer schwer zu entfernen sind, können bei einer solchen Konstruktion wegbleiben. Falls besondere Vorsichtsmaßnahmen gegen ein an sich kaum zu erwartendes Ausweichen der Feder nach oben erwünscht sind, kann vorgesehen werden, daß die Feder durch Ausbiegungen ihrer die Ösen durchsetzenden Enden gegen Aushängen gesichert ist. Auch kann ein Ansatz, beispielsweise in Form eines Handgriffes, an der Feder vorgesehen werden, der nur unter elastischer Verformung an einen Anschlat des Bremsklotz-Schuhs vorbei nach oben verschiebbar ist.

Das Aushängen der Feder kann mittels eines Handgriffes, oder aber durch einen eigenen Ansatz, der nur durch eine Öffnung des Bremsklotz-Schuhs zugänglich ist, erfolgen.

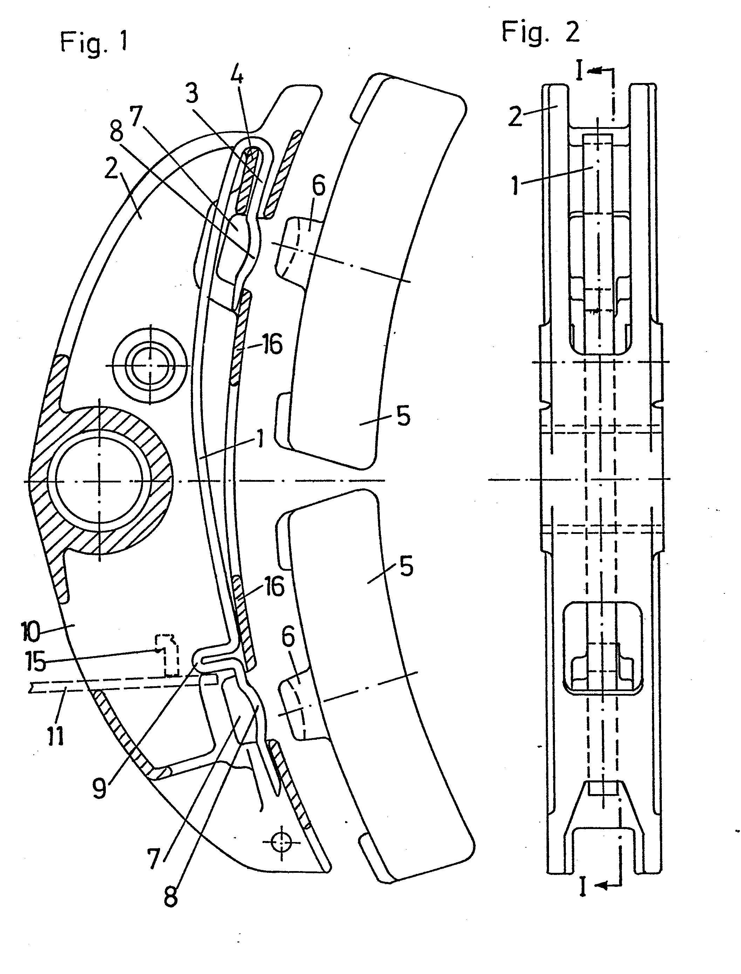

Weitere Einzelheiten der Erfindung werden anschließend anhand der Zeichnungen erläutert. Dabei zeigen Fig. 1 und 2 ein erstes Ausführungsbeispiel im Längsschnitt von der Seite bzw. in einer Ansicht von links in Fig. 1; Fig. 3 und 4 sind entsprechende Darstellungen für ein zweites Ausführungsbeispiel.

Der dargestellte Bremsklotz-Schuh 2 wird durch ein sichelförmiges Gehäuse gebildet, das in Richtung auf die beiden Bremsklotz-Sohlen 5 teilweise durch Stege 16 abgeschlossen ist, welche Aussparungen 7 aufweisen. In diese Aussparungen 7 sind die Sohlen 5 mit Ösen 6 einschiebbar, um dort durch die Feder 1 festgehalten zu werden. Die Fixierung der Sohlen 5 erfolgt dabei einerseits durch den Haken 3 am oberen Ende der Feder 1, andererseits durch das freie untere Ende der Feder 1. Ausbiegungen 8 sichern die Sohlen 5 gegen ein Verschieben nach oben. Die Sicherung der Feder 1 gegen ein Herausfallen bei entfernten Sohlen 5 erfolgt durch einen Zapfen 4. Aus diesem Zapfen 4 kann die Feder 1 herausgeschoben werden, indem ein Werkzeug 11 durch die Öffnung 10 des Bremsklotz-Schuhs 2 eingeführt wird und in Richtung des Pfeiles 15 auf den Ansatz 9 einwirkt. Derselbe Ansatz 9 kann auch dazu verwendet werden, um die Feder 1 ganz über den Zapfen 4 einzuschieben.

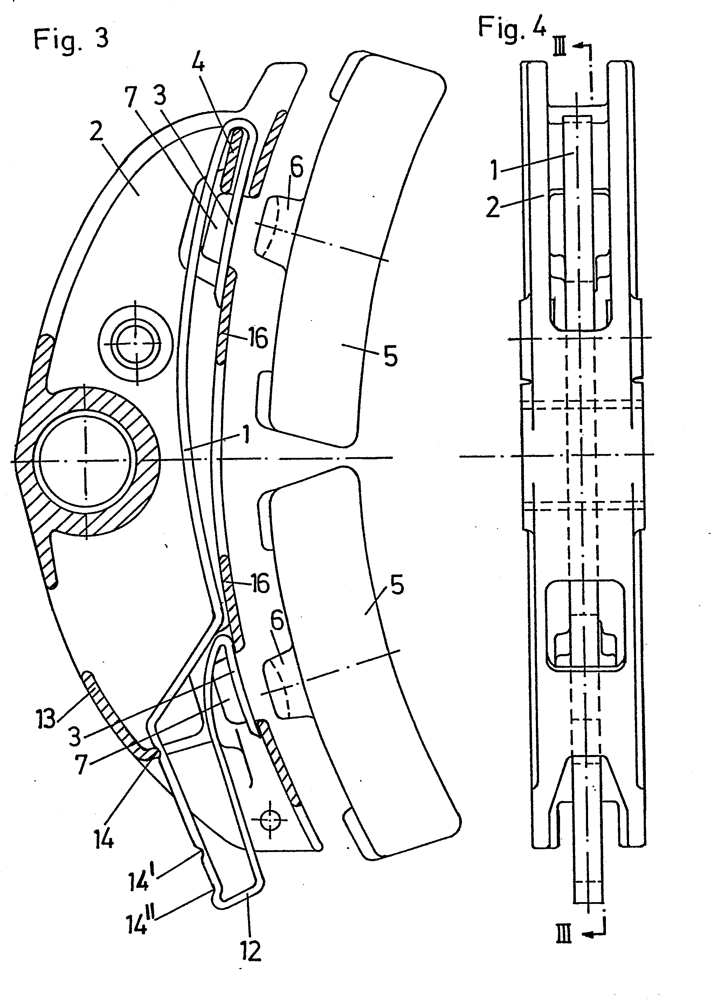

Das in Fig. 3 dargestellte Ausführungsbeispiel unterscheidet sich gegenüber der einfacheren ersten Ausführung durch einen Handgriff 12, der die Fixierung der Feder 1 in der Betriebsstellung und in zwei verschiedenen Montagestellungen verbessert. In der Betriebsstellung ist die Raste 14 am Anschlag 13 des Bremsklotz-Schuhs 2 verrastet. Zur Montage neuer Sohlen 5 wird hingegen die Feder 1 so weit nach oben verschoben, daß die Sohlen 5 herausgenommen werden können. Die Feder 1 liegt dann zunächst am Anschlag 14" an. Daraufhin wird der obere Schuh 5 eingeführt und der Handgriff 12 so weit nach unten gezogen, bis die Raste 14' mit dem Anschlag 13 in Eingriff kommt. Der kürzere untere Haken 3 erreicht erst bei dieser Stellung den Rand der zugehörigen Ausnehmung 7. Nun wird auch die untere Sohle 5 eingeschoben, während die obere

0071762

Sohle 5 bereits gegen Herausfallen gesichert ist, und die Feder 1 in die Betriebsstellung gebracht. Es wäre natürlich auch möglich, den unteren Haken 3 länger zu machen als den oberen Haken 3, und die Montage mit der unteren Sohle 5 zu beginnen.

- 5 -

0071762

PATENTANSPRÜCHE

1. Bremsklotz für Schienenfahrzeuge, bei dem an einem Bremsklotz-Schuh mittels einer in einen Zapfen einhängbaren Bremsklotz-Feder mindestens eine Bremsklotz-Sohle befestigt ist, wobei wenigstens das obere Ende der nach oben in den Bremsklotz-Schuh einschiebbaren Feder einen unten offenen Haken aufweist, der nach unten in eine Öse eingeschoben ist, die in eine Aussparung des Bremsklotz-Schuhs eingesteckt ist, dadurch gekennzeichnet, daß die Feder (1) mittels eines der an ihr vorgesehenen, nach unten offenen Haken (3) in den Zapfen (4) eingehängt ist.

2. Bremsklotz nach Anspruch 1, dadurch gekennzeichnet, daß die Feder (1) durch Ausbiegungen (8) ihrer die Ösen (6) durchsetzenden Enden gegen Aushärten gesichert ist.

3. Bremsklotz nach Anspruch 1, dadurch gekennzeichnet, daß die Feder (1) zur Erleichterung des Aushängens und gegebenenfalls auch des Einhängens einen Ansatz (9) aufweist, der durch die Öffnung (10) des Bremsklotz-Schuhs (2) mittels eines Werkzeuges (11) erfaßbar ist.

4. Bremsklotz nach einem der Ansprüche 1 bis 3, dadurch gekennzeichnet, daß die Feder (1) einen an sich bekannten Handgriff (12) aufweist, der mit einem Anschlag (13) am Bremsklotz-Schuh zusammenwirkt, wodurch die Feder (1) nur gegen Federkraft nach oben verschiebbar ist.

5. Bremsklotz nach Anspruch 4, dadurch gekennzeichnet, daß der Handgriff (12) mit Rasten (14 - 14") versehen ist, die dem Betriebszustand sowie vorzugsweise zwei verschiedenen Montagezuständen entsprechen.

0071762

Fig. 1

Fig. 2

0071762

## Fig. 3

## Fig. 4

Europäisches
Patentamt

EUROPÄISCHER RECHERCHENBERICHT

0071762
Nummer der Anmeldung

EP 82 10 5983

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 061 964 (GRAND) --- | | F 16 D 65/06<br>B 61 H 1/00 |
| A | DE-A-3 033 936 (ASEA) --- | | |
| A | DE-B-1 530 261 (STE NATIONALE) --- | | |
| A,D | DE-B-1 215 741 (DEUTSCHE BUNDES B.) --- | | |
| A,D | AT-B- 339 365 (HAMMERWERK) ----- | | |

**RECHERCHIERTE SACHGEBIETE (Int. Cl. ³)**

F 16 D 65/06
F 16 D 65/04
F 16 D 65/02
F 16 D 65/00
F 16 D 65/09
F 16 D 69/04
B 61 H 1/00

Der vorliegende Recherchenbericht wurde für alle Patentansprüche erstellt.

| Recherchenort | Abschlußdatum der Recherche | Prüfer |
|---|---|---|
| DEN HAAG | 05-11-1982 | HARTEVELD C.D.H. |